# EUROPÄISCHE PATENTSCHRIFT

(11) **EP 3 144 352 B1**
(45) Veröffentlichungstag und Bekanntmachung des Hinweises auf die Patenterteilung: **16.05.2018**
(21) Anmeldenummer: 15185834.7
(22) Anmeldetag: 18.09.2015
(51) Int. Cl.: C09C 1/64, C09D 5/03, C09D 5/36, C09D 7/12, C08K 9/10, C09C 1/00, C09C 1/62

(54) **PULVERLACK SOWIE VERFAHREN ZUR HERSTELLUNG EINES PULVERLACKS**
POWDER PAINT AND METHOD OF PREPARING A POWDER BASED VARNISH
LAQUE EN POUDRE ET PROCÉDÉ DE FABRICATION D'UNE LAQUE EN POUDRE

(43) Veröffentlichungstag der Anmeldung: 22.03.2017
(73) Patentinhaber: TIGER Coatings GmbH & Co. KG, 4600 Wels (AT)
(72) Erfinder: LUTZ, Christian, 4600 Wels (AT); HERZHOFF, Carsten, 4600 Wels (AT)
(74) Vertreter: Sonn & Partner Patentanwälte

(56) Entgegenhaltungen:
- EP-A1- 0 176 132
- EP-A1- 2 896 661

## Beschreibung

Die vorliegende Erfindung betrifft einen Pulverlack umfassend mindestens einen Basispulverlack B und mindestens einen Effektpulverlack A mit Effektpigmenten, die Herstellung eines derartigen Effektpulverlacks durch eine Effektpigment-schonende Dispergierung von Effektpigmenten in einer Schmelze von transparentem Pulverlack durch beispielsweise schonende Extrusion sowie eine Effektpulverbeschichtung wie sie durch den erfindungsgemäßen Pulverlack vorgesehen werden kann.

### Stand der Technik:

Nach aktuellem Stand der Technik werden heutzutage Metallicpulverlacke, oder auch Effektpulverlacke, insbesondere RAL 9006, RAL 9007, DB Farben oder Eisenglimmerfarben, im sogenannten Bonding oder Dryblendverfahren hergestellt. Dabei wird Pulverlack in Pulverform mit Effekt-Pigmenten und Additiven im richtigen Verhältnis verwogen und in einem anschließenden Mischprozess homogenisiert. Als Pulverlack dient hier insbesondere Effektpulverlack auf Harzbasis, auf Basis von Polyester/Primid, Polyester/Epoxymischungen, Reinepoxi, oder Polyurethanharzen. Als Effektgeber werden insbesondere Pigmente auf Basis von Aluminiumflakes, natürlichen oder künstlichen Glimmer oder auf Basis von Glas verwendet. Diese Pigmente sind je nach Anforderung ein oder mehrfach beschichtet und dadurch auch witterungs- und oder chemikalienresistent. Eine nichtabschließende Übersicht ist nachfolgend dargestellt:
- Aluminiumpigmente
- Glimmerpigmente (Perlglanz oder Interferenzpigmente)
- Metalleffektpigmente
- Leuchtpigmente
- Edelstahlpigmente
- Goldbronzepigmente
- Kupferpigmente
- Glasflakes
- Glashohlkugeln

Der Mischprozess kann als einfacher Mischvorgang in einem Mischer mit geringer Umfangsgeschwindigkeit und kurzer Verweilzeit durchgeführt werden, wobei Bindemittel, Additive etc. und die Metallpigmente trocken miteinander vermengt werden. Nachteilig ist dabei, dass solche Trockenmischungen u.a. aufgrund der unterschiedlichen spezifischen Gewichte und elektrostatischen Aufladeverhaltens während der Pulverlackbeschichtung zur Entmischung von Metallpigment und Bindemittel führen. Die Recyclierbarkeit eines derartigen Pulverlackes mit Metallpigmenten ist deshalb bei nach diesem Verfahren hergestellten Pulverlacken nicht mehr gegeben.

Alternativ kann beim sogenannten Bonding-Verfahren durch Erwärmen einer Mischung von Pulverlack und Metallpigment bis an die Glastemperatur des Pulverlackes eine physikalische Anbindung der Metallpigmentteilchen an die Pulverlackteilchen erreicht werden. Bei dem Bonding-Verfahren erfolgt mithin eine Anhaftung der Metallpigmente an der Oberfläche der Pulverlackteilchen durch Einbringung von Energie, z.B. durch externe Wärmequellen oder hohe Scherkräfte, und daraus resultierende Erwärmung des Pulverlacks bis zum Glasübergangspunkt bzw. höher.

Ein weiterer Herstellungsprozess, insbesondere von sogenannten Hammerschlageffekten für die Innenanwendung, erfolgt durch Mischen von Pulverlackrohstoffen, insbesondere von Harzen, Härtern, Pigmenten, Additiven und Füllstoffen, mit staubfreien bzw. entstaubten Aluminium-Effektpigmenten, anschließender Extrusion, Kaltwalzen, Brechen und Vermahlen zu einem Pulverlack. Dieses Verfahren wird meist nur für Hammerschlag-Effekt und Grobstrukturen eingesetzt. Hier kann die geforderte chemische Beständigkeit, auch gegen Witterungseinflüsse wie z.B. bei Fassaden oder hochwetterfesten Systemen einschichtig nicht gewährleistet werden. Daher kommen solche Effekte meist im dekorativen Inneneinsatz zur Verwendung.

Wie zum Beispiel in der CN101955720A erläutert, wird zur Homogenisierung von Pulverlack und Aluminiumeffekt-Pigment zuerst eine Mischung aus den Rohstoffen für einen farblosen Pulverlack verwogen. Zusätzlich wird ein lichtabschirmender Pulverlack mit groben und feinen Aluminium-Pigment hergestellt, alles zusammen 5 - 10 min gemischt und extrudiert. Hierbei ist das Pigment bereits in der Vormischung und durchläuft den gesamten Extrusionsprozeß. Im Anschluss wird das Extrudat flachgewalzt und gekühlt, gebrochen und vermahlen.

Ähnliches beschreibt die EP 0 176 132 A1, gemäß welcher zur Herstellung von Pulverlacken, die aus einer Mischung von zwei Pulverlacken A und B bestehen, die Effektpigmente gleichzeitig mit den Pulverlacken A und B vermischt werden.

In der CN103756525A wird die Herstellung von duroplastischen Pulverlacken beschrieben. In diesem Verfahren werden die Rohstoffe, bestehend aus Polyester Harzen, Härter, Additiven und Mica (Glimmer) Pigment in einem High-Speed Edelstahlmischer gemischt und anschließend in einem Zweiwellenextruder extrudiert. Im Anschluss wird das so erhaltene Produkt kaltgewalzt, gebrochen und vermahlen. Auch hier wird das Pigment bereits in der Vormischung eingewogen und dem Extrusionsprozeß am Anfang zugeführt.

Die EP 2 896 661 A1 betrifft einen Pulverlack in partikulärer und ausgehärteter Form mit Effektpigmenten sowie ein Verfahren zur Herstellung von Pulverlack mit Effektpigmenten. Dabei wird mittels eines Extruders eine filmbildende homogene thermoplastische Lackmasse aus den Ausgangsstoffen, insbesondere umfassend Bindemittel, Additive, Farbmittel und/oder Füllstoffe, hergestellt, welche Lackmasse nach dem Verlassen des Extruders vermahlen wird, wobei die Effektpigmente in einem Endbereich des Extruders zugegeben und in der viskosen Lackmasse dispergiert werden. Die Effektpigmente werden dadurch mit der filmbildenden Lackmasse benetzt und umhüllt, wobei die Oberfläche der Effektpigmente wenigstens zu 50%, insbesondere wenigstens zu 75%, bevorzugt wenigstens zu 90% von der Lackmasse benetzt sind. Die Zusammensetzung des fertigen Pulverlacks ist dabei identisch mit der Zusammensetzung, die zur Umhüllung der Effektpigmente verwendet wurde.

Die DE 102007006820 A1 betrifft Metalleffektpigmente, die eine homogene Kunstharzschicht aufweisen, wobei die Kunstharzbeschichtung Polyacrylat und/oder Polymethacrylat sowie organofunktionelles Silan umfasst. Die Kunstharzschicht wird durch Polymerisation in situ als Schicht auf die Metalleffektpigmente aufgebracht.

Aus der WO 2005/063897 A2 sind chemisch und mechanisch beständige Metalleffektpigmente bekannt, die mit chemisch und/oder unter Einwirkung von beispielsweise UV- oder IR-Strahlung vernetzbaren oligomeren und/oder polymeren Bindemitteln beschichtet sind. Die Metalleffektpigmente können auf diese Weise in einem polymeren Film eingebettet werden. Die Bindemittel sind nach der Beschichtung der Metallpigmente noch härtbar oder polymerisierbar, weshalb die Metallpigmente in Pulverlack Verwendung finden. Während der Beschichtung bzw. beim Verdampfen des Lösungsmittels können die Bindemittel zwar leicht anpolymerisieren, sie härten jedoch nicht aus. Das Metallpigment kann auch mit dem gleichen Bindemittelsystem beschichtet werden, in das es später - beispielsweise in einem Pulverlack - auch eingearbeitet und verarbeitet wird. Hergestellt werden die Metalleffektpigmente durch Dispergieren der Metallpigmente in einer Lösung oder Dispersion eines oligomeren und/oder polymeren Bindemittels in einem organischen Lösemittel und anschließendem Versprühen, oder Versprühen einer Lösung oder Dispersion eines oligomeren und/oder polymeren Bindemittels in einem organischen Lösemittel auf in einem Gasstrom verwirbelte Metallpigmente, sowie Trocknen der mit Bindemittel beschichteten Metallpigmente in einem bewegten Gasstrom.

### Bedarf für die Erfindung:

Pulverlack-Effekte für z.B. die Fassaden oder Fensterbeschichtung sollen sich durch einen markanten Effekt (sogenannter Sparkling Effekt) auszeichnen, der vor allem bei dunklen Basisfarbtönen sehr stark zur Geltung kommt. Aufgrund des hohen Kontrasts zwischen helleren, brillanten Effektpigmenten und der dunklen Basisfarbe sind geringste Unterschiede in der Effektkonzentration, vor allem am fertigen Objekt sehr leicht zu erkennen, insbesondere wenn mehrere beschichtete Bauteile direkt miteinander verbaut werden und Stoß an Stoß ausgerichtet wurden. Bei größeren Bauteilen konnten sich bislang unerwünschte Wolken oder Streifenbildungen zeigen (punktuell erhöhte Pigmentkonzentration). Zusätzlich führen Beschichtungen auf unterschiedlichen Beschichtungsanlagen bzw. bei unterschiedlichen Anlageneinstellungen und Teilegeometrien teilweise zu unterschiedlichen Beschichtungsergebnissen und Farbton/Effekt-Ausbildung. Diese Farbton-Schwankungen sind von Bauunternehmern bzw. Architekten nicht erwünscht und werden reklamiert, auch wenn dies nur ein optischer Mangel ist und keinen Einfluss auf die Schutzwirkung des Pulverlacks hat.

Zusätzlich spielt der Anteil an Rückgewinnungspulver beim Effektpulverlack eine große Rolle. Während des Beschichtungsvorgangs wird das Pulver, welches sich nicht am Objekt niederschlägt, abgesaugt und in einen Zyklon weitergeleitet. In diesem Zyklon wird durch Rotation und Schwerkraft der Feinstanteil vom Rest abgetrennt und abgesaugt. Der Rest wird über ein Dosiersystem gesammelt und/oder in definierten Mengen zum Frischpulver und damit dem Beschichtungsprozess wieder zugeführt. Bei Effektpulverlacken die über das Dryblend Verfahren hergestellt wurden besteht die Gefahr, dass die feinen Metalleffektpigmente über diesen Zyklon separiert und abgesaugt werden. Dies zeichnet sich durch den sogenannten Effektdrift ab, der den Farbton des Effektpulverlacks über die Zeit immer weniger metallisch macht. Dadurch ist der Anteil an Rückgewinnungspulver stark limitiert. Bei Pulvern die nach dem Bondingverfahren hergestellt wurden ist dieser Effektdrift nur geringfügig bemerkbar, da das Pigment durch den Prozess an das Pulverkorn "angeklebt" wird und sich daher im Luftstrom des Zyklons nicht separiert. Trotzdem ist es gebräuchlich, nicht mehr als ca. 30% Rückgewinnungspulver während der Applikation zu verwenden.

### Aufgabe der Erfindung:

Aufgabe der vorliegenden Erfindung ist die Herstellung von einzigartigen und brillanten Effektpulverlacken, deren Erscheinungsbild bzw. Effektausprägung nicht oder nur unwesentlich von Pistolentyp, Anlagen-Einstellung, Anteil an Rückgewinnungspulver und Teilegeometrie beeinflusst wird. Diese absolut verarbeitungssicheren und ausgeprägten Metallic-Effekte besitzen eine besondere Tiefenwirkung und sind für den Einsatz in hochwetterfesten Systemen geeignet. Die Effekte sind mit denen von Nasslacken absolut vergleichbar. Weiters betrifft die vorliegende Erfindung einen derartigen Pulverlack, enthaltend erfindungsgemäß hergestellte Effektpigmente in einem vermahlenen Premix.

Überraschend wurde gefunden, dass die Kombination eines vermahlenen Premixes, umfassend Effektpigmente schonend - bei geringen Scherkräften und somit ohne wesentliche Reduktion der Partikelgröße - dispergiert in eine Schmelze aus mindestens einem transparenten Pulverlack, mit einem zweiten Pulverlacks welcher bevorzugt gefärbt ist, zu Effektpulverlacken führt, welche sich auszeichnen durch:
- Hohe Prozessstabilität bei unterschiedlichsten Applikationsparametern
- Ausgeprägte Metallic-Effekte, insbesondere gekennzeichnet durch eine hohe Tiefenwirkung, einen brillanten Effekt und insbesondere durch eine Unabhängigkeit vom Betrachtungswinkel der Effekte. Auch zeigen mit den erfindungsgemäßen Metallic-Pulverlacken beschichtete Substrate über die Fläche deutlich geringere Farbschwankungen. Diese Eigenschaften konnten in bisherigen Metallic-Pulverlacken hergestellt nach dem Stand der Technik nicht realisiert werden.
- Verbesserte Rückgewinnbarkeit des Pulverlacks durch einen erhöhten Anteil an Rückgewinnungspulver, das zur Beschichtung verwendet werden kann. Dadurch verringert sich der Anteil des Abfalls, der entsorgt werden muss.

### Beschreibung der Erfindung

Die oben erwähnte Aufgabe wird erfindungsgemäß gelöst durch einen Pulverlack umfassend mindestens einen Basispulverlack B und mindestens einen Effektpulverlack A mit Effektpigmenten, wobei die Effektpigmente in Effektpulverlack A von einer transparent härtenden Pulverlackmatrix zumindest teilweise umhüllt sind. Die Effektpigmente können dabei in einer Schmelze aus transparentem und meist farblosem Effektpulverlack dispergiert sein. Als transparenter und zumeist farbloser Pulverlack wird meist eine Pulverlackzusammensetzung eingesetzt, die vorwiegend nur aus Harzen/Härtern und erforderlichen Additiven (zB zur Filmentgasung) zusammengesetzt ist. Der ausgehärtete Pulverlackfilm zeigt eine hohe Transparenz (Lichtdurchlässigkeit). Im Sinne der Erfindung wird bevorzugt ein transparenter Pulverlack eingesetzt, welcher bei Schichtdicken eines ausgehärteten Films von 15 µm noch ausreichende Transparenz besitzt, um die darunter liegenden Lackschichten oder Substrate zu erkennen.

Wie im Stand der Technik hinlänglich bekannt ist, führt eine zu starke Scherbeanspruchung beim Dispergieren (Mischen oder Extrusion) von Effektpigmenten in einem derartig hergestellten Pulverlack üblicherweise dazu, dass die Effektpigmente beschädigt werden und nicht mehr den gewünschten oder zumindest einen sehr reduzierten Effekt erzielen. Darüber hinaus ergeben sich noch andere Nachteile, wie die zuvor erwähnte mangelnde Recyclierbarkeit. Überraschenderweise hat sich gezeigt, dass das Einbringen mit geringer Scherwirkung von Effektpigmenten in aufgeschmolzene, transparente Pulverlacke eine sehr gute Dispergierung/Homogenisierung der Effektpigmente in der Polymermatrix des transparenten Pulverlacks ermöglicht, bei gleichzeitig nicht geringer ausfallenden optischen Eigenschaften als bei durch Bonding oder Dryblending (Trockenmischung) an Pulverlackkörner oberflächig gebundenen Effektpigmenten. Besonders überraschend war hierbei die Erkenntnis, dass bei einem Pulverlack mindestens enthaltend zwei Pulverlacke A und B, wobei der Pulverlack A Effektpigmente enthält, welche von einer transparenten Pulverlackmatrix zumindest teilweise umgeben sind, und der Pulverlack B ein färbiger
Basispulverlack und nicht transparent im Sinne dieser Erfindung ist, ganz im Gegenteil hervorstechende Effekteigenschaften auftraten, wie gleichmäßiger Farb- und Effekteindruck von beschichteten Substraten (keine sogenannte Wolkenbildung) und vor allem ein im Wesentlichen vom Betrachtungswinkel unabhängiges Effektbild. Diese Unabhängigkeit vom Betrachtungswinkel lässt sich nicht nur optisch bestimmen sondern auch messtechnisch. Die Proben wurden mittels Farbmessgerät "BYKmac" der Fa. byk vermessen. Aussagekräftig ist hier der si- (Sparkle Intensität) und der sa- (Sparkle Fläche) Wert, welcher in drei unterschiedlichen Messwinkel bestimmt wird. Vermessen wurde einerseits eine Beschichtung mit gebondetem Pulverlack und eine Beschichtung die mit dem erfindungsgemäßen Pulverlack hergestellt wurde. Hier zeigt sich bei ähnlichem Effektbild ein signifikanter Unterschied, wie in Tabelle 1 ersichtlich ist.
Die Messwerte zeigen, dass die Sparkle Intensität gemessen auf Beschichtungen mit dem erfindungsgemäßen Pulverlack hergestellt, in allen drei Messwinkel sehr hoch ist, Der Unterschied zwischen den Messwinkeln ist gering (max. ca. 30% geringer als der höchsten Wert). Bei gebondetem Pulverlack ist die Sparkle Intensität nur in einem Winkel hoch, in den anderen beiden Winkeln signifikant niedriger. Dabei ist der niedrigste Wert bis zu 90% geringer als der höchste gemessene Wert am selben Blech, unter einem anderen Messwinkel.

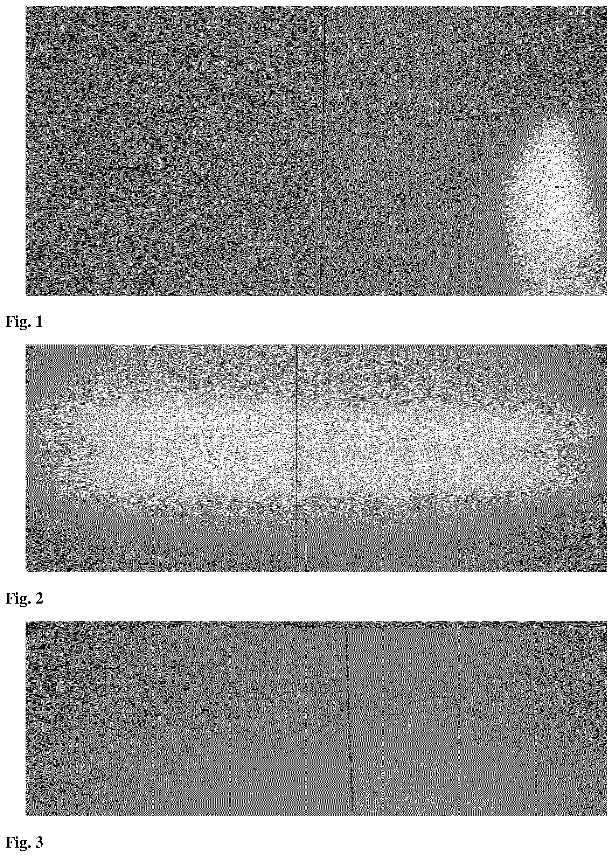

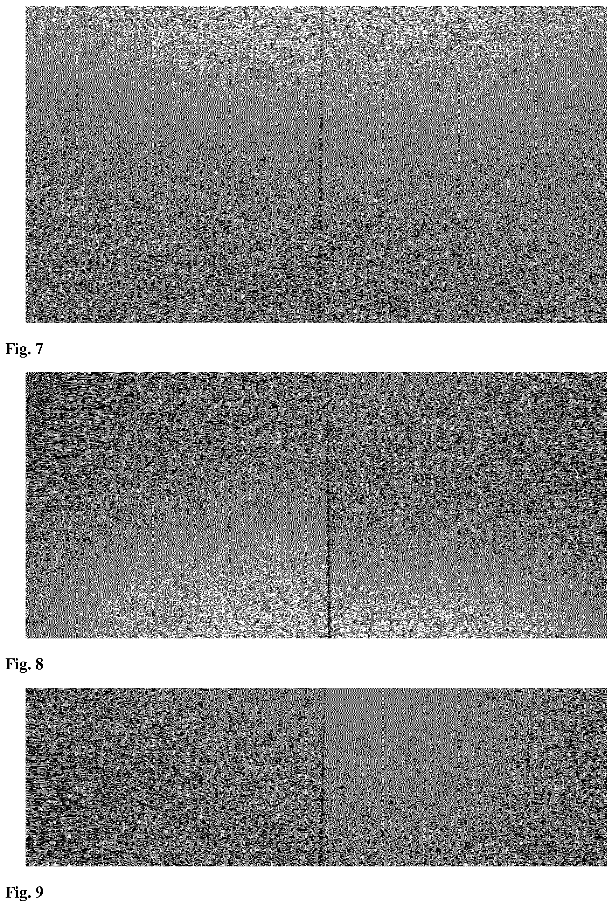

Die Fig. 1 bis einschließlich Fig. 9 zeigen diesen Effekt auch optisch. Es wurde dazu das mit gebondetem Effektlack lackierte (Blech am Foto links) und das mit dem erfindungsgemäßen Pulverlack beschichtete Blech (Blech am Foto rechts) planparallel nebeneinander gelegt und unter verschiedenen Winkeln in einer Lichtkabine fotografiert.

Nach Meinung der Erfinder - ohne hier an eine Theorie gebunden zu sein - lässt sich der beobachtete und auch gemessene Effekt dadurch erklären, dass bei dem erfindungsgemäßen Pulverlack in der Lackschicht Kanäle entstehen, die aus transparentem Pulverlack bestehen. Dadurch können für den Beobachter auch jene Pigmente sichtbar werden, die nicht an der Lackoberfläche, sondern nur im Inneren der Lackbeschichtung liegen. Durch diesen Effekt entsteht einerseits die Unabhängigkeit vom Betrachtungswinkel aber auch ein optisch wahrnehmbare 3D Effekt bzw. eine Tiefenwirkung des erfindungsgemäßen Pulverlacks. Pulverlacke nach dem bisherigen Stand der Technik, die durch Dryblend, Bonding oder durch Einextrusion von Effektpigmenten in eine Pulverlackschmelze hergestellt wurden, ob von Anfang an oder via einen Sidefeeder, weisen diesen Effekt nicht auf.

Lichtmikroskopische Aufnahmen von Querschliffen von mit dem erfindungsgemäßen Pulverlack hergestellten Lackschichten untermauern die oben genannte Theorie der Kanalbildung durch eine transparente Pulverlackmatrix.

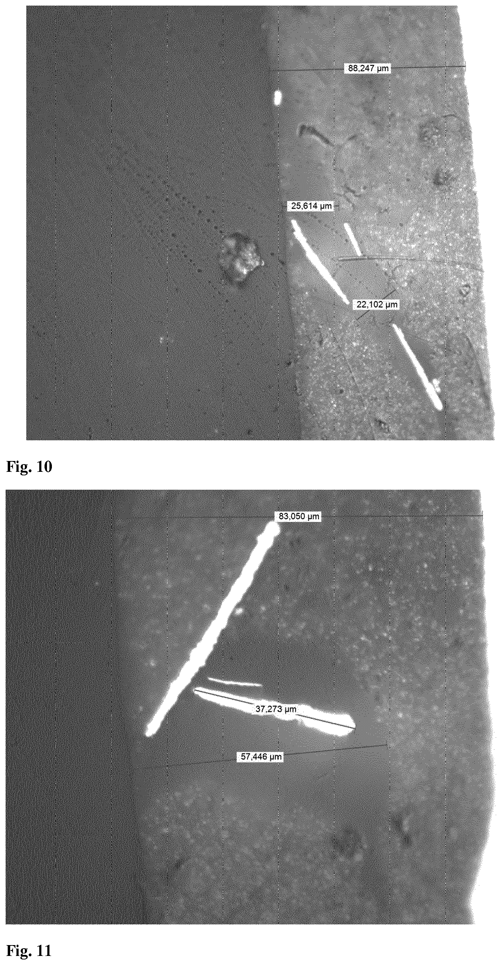

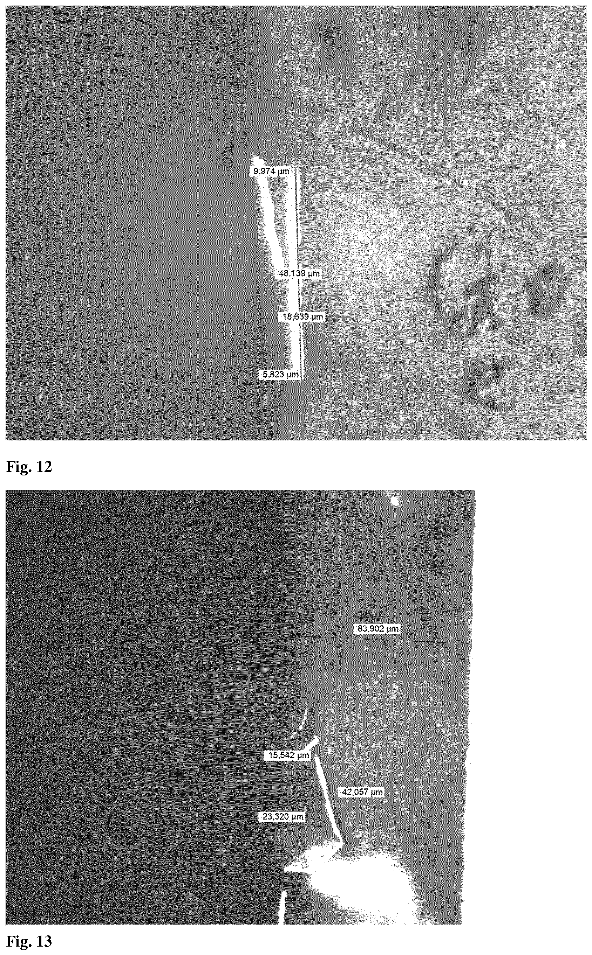

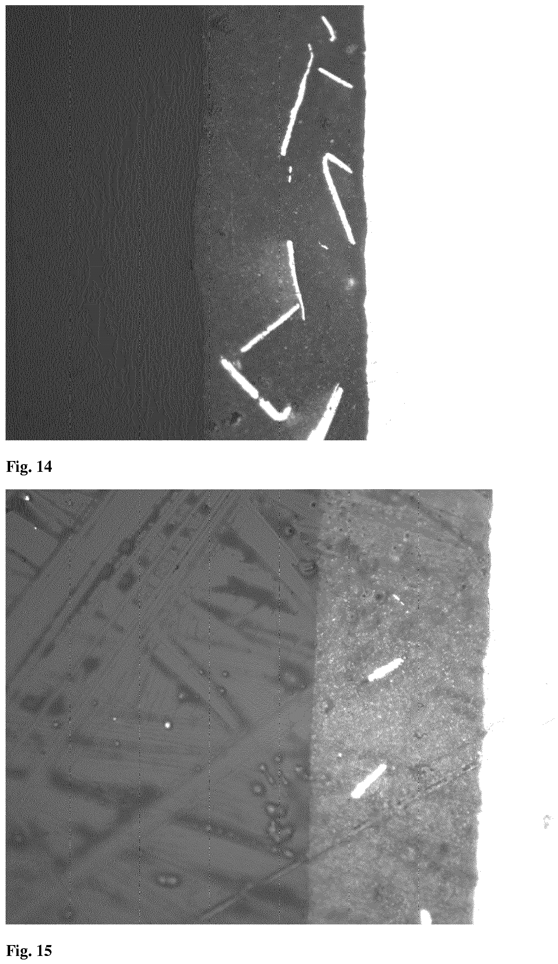

In Fig. 10 bis Fig. 16 sind Aufnahmen von derartigen Querschliffen dargestellt. Die dunkleren Bereich, ohne irgendwelche sichtbaren Partikel (wie zB Füller oder Farbpigmente) bestehen aus der erwähnten transparenten Pulverlackmatrix. Diese Kanäle reichen bis zu 60 µm in die Pulverlackschicht, und machen auch Pigmente sichtbar (die Effektpigmente erscheinen in diesen Aufnahmen durch die Beleuchtung als helle Flächen auf), die weit im Lack eingebettet sind.

Beim erfindungsgemäßen Pulverlack sind die auf das Effektpigment in Effektpulverlack A während der Herstellung auftretenden Scherkräfte so gering, dass der Großteil der Effektpigmente keine wesentliche Reduktion der Partikelgröße erfahren. Dies kann technisch beispielsweise dadurch gelöst werden, dass, beispielsweise in einem beheizten Rührreaktor, transparenter Pulverlack aufgeschmolzen wird und mindestens ein Effektpigment in die Schmelze eingerührt wird, wobei der aus dieser Pulverlackschmelze nach dem Erkalten durch Vermahlen gewonnene Effektpulverlack A dann mit einem opaken, vorzugsweise färbigen Basispulverlack B vermischt wird. Auch andere technische Ausführungsformen sind im Rahmen der Erfindung denkbar. Eine bevorzugte Ausführungsform besteht darin, dass mindestens ein Effektpigment durch mindestens einen Sidefeeder während eines Extrusionsprozesses einer transparenten Pulverlackschmelze zugegeben wird, wobei der aus dieser Pulverlackschmelze nach dem Erkalten durch Vermahlen gewonnene Effektpulverlack A dann mit einem Basispulverlack B vermischt wird. Der Begriff "Sidefeeder" impliziert die Zugabe eines Stoffes (üblicherweise laut Stand der Technik ein Additiv oder Effektpigment, siehe hierzu beispielsweise Informationsmaterial des Extruder-Herstellers Leistritz Extrusionstechnik GmbH (Deutschland) "Master_V_07_GB/17.09.13 Masterbatch)) an einer anderen Position im Extruder-Verfahrensteil als direkt am Beginn des Extruders (Premix-Einzug in Barrel 1). Durch den Sidefeeder wird das Effektpigment seitlich in den Extruder zwangsgefördert und in einem bestimmten Verhältnis zum transparenten Pulverlackpremix in die Schmelze eingebracht. Durch die Position des Sidefeeders entlang des Verfahrensteils und die verwendete Schneckenkonfiguration kann die Scherkraft, die auf das Pigment im Extruder wirkt, beeinflusst werden. Eine geringe Scherkraft innerhalb des Extruders zeichnet sich durch eine geringe Zerstörung des Effekt-Pigments aus. Durch die Verwendung von nur der Durchmischung oder der Förderung der Extruderschmelze dienenden Schneckenelementen ist eine Reduktion der Scherkräfte auf ein erfindungsgemäß vorgesehenes Maß bei gleichzeitig ausreichender Homogenisierung/Dispergierung möglich. Vor allem hat sich eine Zugabe im hinteren Teil vorzugsweise im letzten Drittel des Verfahrensteils (zB im vorletztes Gehäuse) des Extruders via Sidefeeder als besonders vorteilhaft erwiesen. Ab dem Zugabepunkt des Pigments wird durch spezielle Schneckenkonfigurationen, zum Beispiel die alleinige Verwendung von Förderelementen, die Scherkraft so gering wie möglich gehalten, damit das oder die Pigment(e) nur in einem geringen Ausmaß zerstört bzw. beschädigt wird/werden.

Wie bereits erwähnt kann für den erfindungsgemäßen Pulverlack ein transparenter Effektpulverlack A hergestellt werden durch Zugabe von mindestens einem Effektpigment durch mindestens einen Sidefeeder in die Schmelze eines nachfolgend transparent härtenden Pulverlacks während eines Extrusionsprozesses und Vermahlen der erkalteten Schmelze, wobei der Effektpulverlack A dann mit mindestens einem weiteren Pulverlack B, dem sogenannten Basispulverlack, vermischt wird. Möglich ist auch die gemeinsame Vermahlung von Extrudat-Chips aus dem erfindungsgemäßen Effektpulverlack A mit Extrudat-Chips eines anderen Pulverlacks B in einem gemeinsamen Mahlprozeß. Der Basispulverlack B kann dabei ein unifarbener Pulverlack sein, der keine Effektpigmente enthält, oder ein effekthaltiger Pulverlack, der durch Dryblend, Bonding oder Extrusion hergestellt wurde.

Wie bereits zuvor erwähnt kann der Effektpulverlack A in einem Extruder durch Zugabe von Effektpigment zu einer transparenten Pulverlackschmelze über einen Sidefeeder hergestellt werden. Der Sidefeeder selbst befindet sich im letzten Drittel des Verfahrensteils. Nach dem Zugabepunkt des Sidefeeders werden nur noch geringe Scherkräfte über die Extruderwelle eingebracht. Der Effektpulverlack wird nach dem Extrudieren kaltgewalzt, gebrochen und vermahlen. Der erfindungsgemäße Pulverlack kann dann durch Ansetzen und Verwiegen der Rohstoffe, einschließlich des transparenten Effektpulverlacks A und des Basispulverlacks B, anschließender Vormischung, Extrusion oder Mischen, Kaltwalzen, Brechen und Vermahlen hergestellt werden. Der erfindungsgemäße Pulverlack kann aber auch in einem weiteren Prozessschritt dann noch mit Effektpigment zusätzlich veredelt werden, was insbesondere durch ein Bondingverfahren möglich ist.

In einer bevorzugten Ausführungsform der vorliegenden Erfindung umfasst der erfindungsgemäße Pulverlack Effektpulverlack A mit Basispulverlack B vermischt in einem Masseverhältnis von 1 - 50% Effektpulverlack A mit 50 - 99% Basispulverlack B, besonders bevorzugt 5 - 30% Effektpulverlack A mit 70 - 95% Basispulverlack B. Die Herstellung des erfindungsgemäßen Pulverlacks kann durch sogenanntes Dryblenden oder im Bondingverfahren erfolgen. Auch die Vermischung von Effektpulverlack A mit Basispulverlack B in der Schmelzphase ist im Rahmen der Erfindung möglich.

Als Extruder können im Rahmen der Erfindung prinzipiell alle am Markt befindlichen Typen, wie Ein- oder Mehrwellenextruder, mit einem Sidefeeder eingesetzt werden. Die hierfür einzustellenden Parameter, wie beispielsweise Schneckenkonfigurationen, Drehmoment und Durchsatz, sind in Abhängigkeit des eingesetzten Pulverlacksystems und der einzustellenden Pulverlackeigenschaften flexibel gestaltbar, solange die Scherkräfte ab der Zugabeposition der Effektpigmente durch den Sidefeeder entsprechend niedrig gehalten werden. Hierbei hat sich bei den getesteten, kommerziellen am Markt befindlichen Extrudertypen eine Positionierung des Sidefeeders zur Beimischung von Effektpigmente im hinteren Drittel des Extruders bewährt. Um hier Klarheit zu gewährleisten sei angemerkt, dass es natürlich auch möglich ist, über den/oder die Sidefeeder auch andere Stoffe als Effektpigmente dem Pulverlack zuzuführen (z.B. Additive).

Andere Ausführungsformen, welche auch eine Einmischung in die Schmelzphase ohne wesentliche Scherkräfte ermöglichen, sind natürlich auch im Sinne der Erfindung.

Besonders bewährt hat sich dieses Verfahren für die erfindungsgemäßen Pulverlacke zur Substitution von Pulverlacken nach dem Stand der Technik, welche in die Kategorie C laut ofi- Merkblatt 44 eingestuft sind. Das sind insbesondere Pulverlacke, die einen sehr deutlich sichtbaren Sparkle-Effekt aufweisen. Ein solcher Effekt lässt sich insbesondere durch Mischen von Aluminiumeffektpigmenten mit einem D50 >= 35 µm in Form von sogenannten Silver-Dollars mit einen dunklen Basisfarbton herstellen. Silver Dollar Pigmente werden aus einem speziellen Aluminiumgries hergestellt und nach der Größenklassifizierung gemahlen. Dadurch entstehen Pigmente, die durch ihre runde bis ovale Form und glatter Oberfläche gekennzeichnet sind. Diese Pigmente weisen in der Regel einen sehr hohen Sparklinggrad auf, d.h. das Licht wird durch das Pigment wenig gestreut und stärker reflektiert. Je höher der Kontrast zwischen Effektpigment (hell, Silber) und Basisfarbton ist, desto schwieriger lassen sich diese Effektfarben herstellen und beim Endanwender verarbeiten.
Die erfindungsgemäßen Pulverlacke verhalten sich bei ihrer Verwendung zur Herstellung einer Beschichtung annähernd wie Uni-färbige Pulverlacke. Phänomene, wie zum Beispiel Wolken oder Streifenbildung bei großen Bauteilen treten nicht auf. Auch die typische Randaufhellung bei unterschiedlichen Profilen und Größen, hervorgerufen durch eine Anreicherung von Effektpigmenten an der Kante, ist nicht zu erkennen. Das ist eine merkbare Verbesserung gegenüber Effektpulverlacken gemäß aktuellem Stand der Technik.

Spezifische Substrate zur Beschichtung mit den erfindungsgemäßen Pulverlacken sind insbesondere vorbehandelte und oder gereinigte/entfettete Aluminiumlegierungen oder Stahl und dessen Legierungen. Andere Substrate - wie z.B. Holz und MDF - sind aber prinzipiell auch möglich.

Die erfindungsgemäßen Pulverlacke sind unabhängig vom chemischen Aufbau dadurch gekennzeichnet, dass das/oder die Effekt Pigment(e) ohne wesentliche Zerstörung der Pigmente aufgrund von Scherkräften in die Schmelzphase eingetragen wurde(n). Zur weiterführenden Beschreibung werden an dieser Stelle jedoch typische Pulverlacksystem beschrieben. Weitergehende Informationen finden sich beispielsweise in Powder Coatings - Chemistry and Technology, 3rd edition, Emmanouil Spyrou.

### Pulverlacke:

Potentielle Bindemittel für die erfindungsgemäßen Pulverlacke umfassen gesättigte und ungesättigte Systeme. Letztere können unter anderem radikalisch durch UV und/oder thermische Initiatoren wie Peroxide vernetzt werden. Erstere sind aktuell mengenmäßig dominant im Einsatz. Unter diesen Bindemitteln spielen insbesondere gesättigte Polyester die größte Rolle. Beispielsweise werden an dieser Stelle carboxylfunktionelle Polyesterharze genannt, welche eine Funktionalität 2 oder höher aufweisen. Diese können mit organischen Verbindungen, die zur Reaktion mit den Carboxylgruppen des Polyesters unter Herstellung einer kovalenten Bindung fähig sind, vernetzt werden und sowie ggf. mit gängigen Pigmenten, Füllstoffen und Additiven versetzt werden

Seit den siebziger Jahren gelten Pulverlacke auf der Basis von carboxylfunktionellen Polyesterharzen und der polyfunktionellen Epoxyverbindung Triglycidylisocyanurat (=TGIC) als Industrie-Standard zur Herstellung wetterfester Beschichtungen im Fassadenbau, bei Automobil-Zubehörteilen sowie allgemeinen industriellen Anwendungen.

Als Alternativen zu TGIC als Härter für carboxylfunktionelle Polyesterharze bieten sich derzeit unter anderen β-Hydroxyalkylamide wie PrimidR XL-552 (= Bis[N,N'-di-(β-hydroxyethyl)]-adipamid) oder PrimidR QM-1260 (= Bis[N,N'-di-(β-hydroxypropyl)]adipamid), beide EMS Chemie, an. Ein besonderes Merkmal dieser Härter liegt in ihrer nach heutigem Wissensstand toxikologischen Unbedenklichkeit.

Weitere mögliche Alternativen zu TGIC als Härter für carboxylfunktionelle Polyesterharze sind beispielsweise die Glycidylester aromatischer oder cycloaliphatischer Dicarbonsäuren, ein entsprechender kommerziell verfügbarer Härter von analogem chemischen Aufbau ist z. B. AralditR PT 910 (Terephthalsäurediglycidylester/Trimellit(h)säuretriglycidylester, ca. 75:25) der CIBA Spezialitätenchemie GmbH. Die Anwesenheit des trifunktionellen Trimellit(h)säureesters in AralditR PT 910 ist für die Vernetzungsdichte eingebrannter Beschichtungen als vorteilhaft im Vergleich zu reinen Diglycidylestern zu bewerten.

All diesen genannten Produkten kommt heute zur Formulierung von Pulverlacken aus carboxylfunktionellen Polyesterharzen zunehmend Bedeutung zu, wobei sich jedoch TGIC auf zahlreichen Märkten weiterhin behaupten konnte. Polyesterharze zur Herstellung wetterstabiler Pulverbeschichtungen, welche mit Polyepoxiden und/oder β-Hydroxyalkylamiden gehärtet werden, weisen i. a. eine Säurezahl im Bereich von 15 bis 70 mg KOH/g Polyester und eine Hydroxylzahl kleiner/gleich 10 mg KOH/ g Polyester auf. Diese bestehen im Wesentlichen aus Einheiten aromatischer Dicarbonsäuren, wie Terephthal- und Isophthalsäure, neben welchen ggf. geringere Mengen an aliphatischen und/oder cycloaliphatischen Dicarbonsäuren, wie etwa Adipin- und/oder Cyclohexandicarbonsäure, Anwendung finden, und aliphatischen Diolen, und zwar bevorzugt verzweigten, wie Neopentylglykol, neben geringeren Anteilen von linearen und/oder cycloaliphatischen Diolen. Auch die Mitverwendung von Hydroxycarbonsäuren oder deren funktionellen Derivaten, wie etwa deren innere Ester (= Lactone), ist möglich. Bekannt ist auch die Modifizierung solcher Harze durch den Einsatz di-und trimerer Fettsäuren. Daneben können geringere Anteile von tri oder höherfunktionellen sowie ggf. monofunktionellen Verbindungen Anwendung finden.

Andere dem Fachmann geläufige Pulverlacke wie Epoxy-, Hybrid-, Urethan-, Acrylatwerden an dieser Stelle exemplarisch als weiterführende Ausführungsformen von den erfindungsgemäßen Effektpulverlacken genannt.

### Effektpigmente für Pulverlacke:

Als Effektpigment werden beim erfindungsgemäßen Pulverlack hauptsächlich zwei Arten von Pigment verwendet, nämlich Aluminiumpigmente und Glimmer/Mica Pigmente. Ebenfalls verwendet werden können Messing- und Kupferpigmente.

Effektpigmente werden in Metalleffektpigmente und spezielle Effektpigmente eingeteilt.

Bei Metalleffektpigmenten werden Plättchen aus Metall, insbesondere aus Aluminium, verwendet. Durch die metallische Oberfläche wird das Licht reflektiert, was von dem Betrachter als Metallic-Effekt wahrgenommen wird.

Wichtige Metalleffektpigmente sind Aluminium-, Messing- und Kupferplättchen.

Perlglanzpigmente und Interferenzpigmente werden unter dem Begriff spezielle Effektpigmente zusammengefasst. Perlglanzpigmente sind Effektpigmente, die aus transparenten Plättchen mit hohem Brechungsindex bestehen. Sie erzeugen durch Mehrfachreflexion einen perlenähnlichen Effekt. Interferenzpigmente sind Effektpigmente, deren farbgebende Wirkung ganz oder vorwiegend auf Interferenz beruht. Interferenzpigmente können auf transparenten oder nichttransparenten Plättchen basieren. Die weiteste Verbreitung in der Industrie haben metalloxidbeschichtete Glimmerpigmente, die je nach Art und Dicke der Beschichtung zu den Perlglanz- oder zu den Interferenzpigmenten gehören können. Die wichtigsten Interferenzpigmente sind plättchenförmiges Titandioxid, plättchenförmige organische Pigmente, Metalloxid-Glimmerpigmente, Aluminiumoxid-Flakes, Ca- Al-Borosilikat-Flakes, Siliciumdioxid-Flakes, metalloxidbeschichtete Metallplättchen oder Multischichtpigment. Viele dieser Pigmente werden im Anschluss noch mit Metalloxiden (z.B. Titandioxid) beschichtet. Je nach Oxidschichtdicke kann dadurch der farbliche Effekt beeinflusst werden. Handelsübliche Bezeichnungen dafür sind Iriodin®, Miraval® oder Colorstream®.

Pigmente basierend auf natürlichen Glimmer werden in der Regel aus natürlich vorkommendem Muscovit-Glimmer durch Mahlen, Fraktionieren, Reinigen und Nachbeschichten, Trocknen und Kalzinieren hergestellt.

Die Wirkung der Pigmente beruht auf dem Prinzip der gerichteten Reflexion bei Metalleffekt-Pigmenten und gerichteter Reflexion und Interferenz bei Perlglanzpigmenten.

Sämtliche Effektpigmente haben gemeinsam, dass der Effekt sehr stark vom Betrachtungswinkel abhängig ist. Bei visuellen Vergleichen wird dies durch Abkippen der Proben simuliert. Eine Farbvermessung ist nur mit Mehrwinkel-Messgeräten sinnvoll.

In einer bevorzugten Ausführungsform der vorliegenden Erfindung ist vorgesehen, dass beim erfindungsgemäßen Pulverlack der durchschnittliche Durchmesser der dispergierten Effektpigmente mindestens 90 % des durchschnittlichen Durchmessers der ursprünglichen Effektpigmente beträgt. Der Durchmesser der Effektpigmente (normalerweise in Form von Pigmentplättchen) beträgt je nach Type üblicherweise etwa 3 bis 100 µm, die Dicke der einzelnen Plättchen beträgt weniger als 1 µm. Die Plättchen können dabei aus einer oder mehreren Schichten bestehen. Das Trägermaterial ist dabei kristallin (beispielsweise Glimmer) oder amorph (Glas- oder Siliciumdixoxid-Plättchen). Zur Erzielung eines guten Effektbildes müssen die Teilchen eine möglichst glatte Oberfläche besitzen und sich in der jeweiligen Anwendung ausrichten.

Eine weitere Einteilung der Metalleffektpigmente wird in Leafing oder Non-Leafing Pigmente durchgeführt.

Leafing Pigmente orientieren sich durch spezielle Oberflächenbehandlungen im ausgehärteten Lackfilm an der Oberfläche. Dadurch entsteht ein starker metallischer Glanz. Dieser Effekt ist aber nicht Kratz bzw. Wischfest, was zumeist eine Überbeschichtung mit einem schützenden Klarlackfilm notwendig macht.

Non-Leafing-Pigmente verteilen sich nach der Applikation gleichmäßig in der Filmmatrix. Nur ein Teil des Pigments orientiert sich an der Oberfläche. Dadurch sind sie gegen Abrieb und Angriff von Chemikalien geschützt. Der Effekt wirkt aber weniger brillant und metallisch als bei Leafing Pigmenten.

Die Erfindung wird nun anhand der nachfolgenden Beispiele und Figuren näher erläutert, wobei sie auf diese Beispiele nicht beschränkt ist.
Fig, 1: Effektfarbe ca. RAL 9007 glänzend ca. 0° geneigt
Fig. 2: Effektfarbe ca. RAL 9007 glänzend ca. 45° geneigt
Fig. 3: Effektfarbe ca. RAL 9007 glänzend ca. 75° geneigt

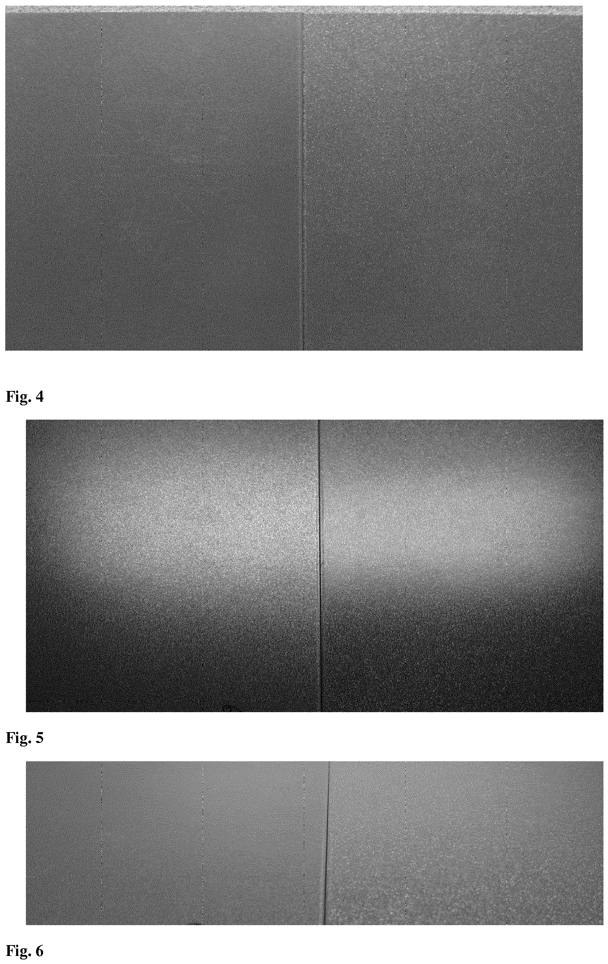

Fig. 4: grau matt metallic ca. 0° geneigt
Fig. 5: grau matt metallic ca. 45° geneigt
Fig. 6: grau matt metallic ca. 75° geneigt
Fig 7: dunkelgrau metallic ca. 0° geneigt
Fig 8: dunkelgrau metallic ca. 45° geneigt
Fig 9: dunkelgrau metallic ca. 75° geneigt
Fig. 10: Querschliff einer mit dem erfindungsgemäßen Pulverlack hergestellten Lackschicht; Die Pigmente (helle Stäbchen) liegen in einem Kanal aus transparenten, lichtdurchlässigen Pulverlack, darum ist der opake, färbige Pulverlack erkenntlich. Rechts von der Lackschicht ist das Substrat zu sehen (helles Aluminiumblech) links das dunkle Einbettungsmaterial des Presslings
Fig. 11: der Kanal aus transparenten Lack reicht ca. 60 µm tief in die Lackschicht hinein, das darin befindliche Pigment wird daher sichtbar, wenn die Oberfläche betrachtet wird
Fig. 12: Pigment liegt etwa 10µm unter der Oberfläche, eingebettet in transparenten Pulverlack und dadurch sichtbar.
Fig. 13: Pigment liegt bis zu 25 µm im transparenten Lack eingebettet. Rundherum ist der opake, färbige Lack zu erkennen.
Fig. 14: Querschliff einer Probe, die mit Pulverlack hergestellt wurde, in der das Pigment in einen Färbigen, opaken Lack einextrudiert wurde. Die Pigmente liegen tief in der Lackmatrix eingebettet und sind NICHT sichtbar.
Fig. 15: Querschliff einer Probe, die mit Pulverlack hergestellt wurde, in der das Pigment in einen Färbigen, opaken Lack durch Bonding eingemischt wurde. Die Pigmente liegen tief in der Lackmatrix eingebettet und sind NICHT sichtbar
Fig. 16: Querschliff einer Probe, die mit Pulverlack hergestellt wurde, in der das Pigment in einen färbigen, opaken Lack durch Bonding eingemischt wurde. Ein Teil der Pigment liegt an der Oberfläche und ist Sichtbar (Effektgebend) der Rest liegt in der Lackmatix und ist daher nicht sichtbar
Fig. 17: Extruderschnecke mit Mischelementen
Fig. 18: Pigment gebondet, 200 fache Vergrößerung; Pigment geringfügig zerstört. (Scherkräfte im Bondingmischer)
Fig. 19: Alupigment einextrudiert, Zugabe direkt mit Premix; Großteil des Pigments wurde zerstört
Fig. 20: Aluminiumpigment einextrudiert, Zugabe über Sidefeeder, Scheckenkonfiguration mit Mischelementen wie in Fig. 17 dargestellt; Pigment wird nur geringfügig geschert.
Fig. 21: Aluminiumpigment im Dryblendverfahren eingemischt.
Fig. 22: Aluminiumpigment mittels Sidefeeder einextrudiert, geringe Scherkraft, Sidefeeder im hinteren Drittel des Extruders, Schneckenkonfiguration mit Förderelementen ab Sidefeeder- Eintrag.
Fig. 23: zum Vergleich zu Fig. 22, Pigment Dryblend eingemischt (sehr geringe Scherkräfte) 100 fach vergrößert; Pigmentform rund bzw. oval, nur wenige kleine Pigmentfragmente.
Fig. 24: Pigment vie Sidefeeder einextrudiert, 100 fache Vergrößerung, Großteil der Pigmente noch Rund/ Oval, nur wenige Fragmente
Fig. 25: Pigment von Anfang an extrudiert, 100 fache Vergrößerung, Pigmentform unregelmäßig, sehr viele kleine Fragmente.
Fig. 26: Aufnahme eines Pulverlackchips, Pigment via Sidefeeder, 200 fache Vergrößerung
Fig. 27: Pulverlack Chip, Pigment von Anfang extrudiert, 200 fache Vergrößerung
Fig. 28: Pigment Masterbatch (Pigment in Farblos) via Sidefeeder, 200 fache Vergrößerung
Fig. 29: Pigment Masterbatch, Pigment von Anfang, 200 fache Vergrößerung

### Beispiele

Die vorliegende Erfindung wird nun anhand der nachfolgenden Beispiele näher beschrieben, auf welche sie jedoch nicht eingeschränkt ist.

Der erfindungsgemäße Pulverlack kann beispielsweise aus zwei Komponenten bestehen, wobei eine Komponente der transparente Effektpulverlack A ist, der andere ein opaker färbiger Basispulverlack B.

### Beispiel 1:

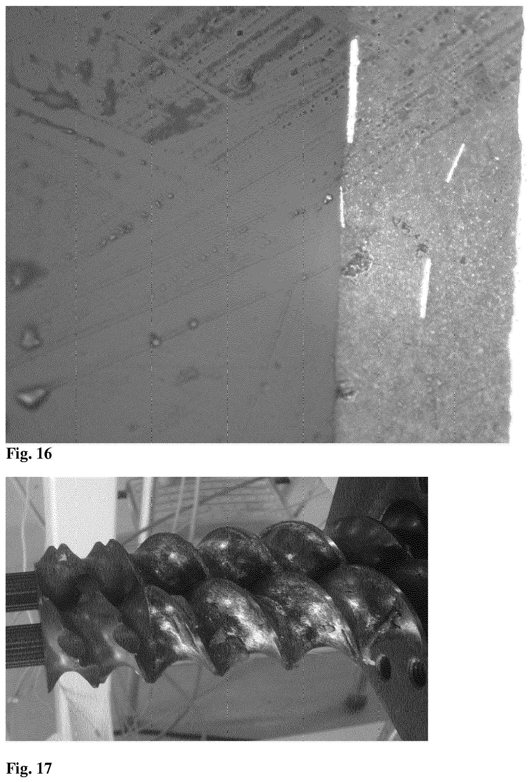

Ein transparenter und farbloser Pulverlack wurde aus 900 Teilen Crylcoat® 4642-3 oder vergleichbaren Polyester, 47 Teilen Primid® XL-552, 5 Teile Richfos® 626, 3 Teilen Benzoin, 5 Teile Worlee® Add 902, 5 Teile Licowax C Micropowder PM und 2 Teilen Tinuvin® zusammengemischt. Über eine gravimetrische Dosierung wird diese Vormischung in einen Zweiwellenextruder (z.B. ZSK 27) eindosiert und mit einer für Pulverlackherstellung geeigneten Schneckenkonfiguration aufgeschmolzen und dispergiert. Solche Konfigurationen sind dem Fachmann geläufig. Im letzten Drittel des Extruder Verfahrensteiles wird mittels einer Zweiwellen- Seitenbeschickung und gravimetrischer Dosierung 5 Teile Aluminiumpulver PCU 5000 zugegeben. Die Schneckenkonfiguration ab dem Sidefeeder wird exemplarisch in Fig. 17 wiedergegeben. Im Extruder herrschen vorzugsweise Temperaturen kleiner 120°C. Im Anschluss wird das flüssige Extrudat kaltgewalzt gebrochen und in einer Prallstiftmühle zu Pulverlack vermahlen (D 50 kleiner 80 µm).

Die Größe der Pigmente (D50 oder Mittelwert) hängt vom gewünschten Effekt ab und kann zwischen 3 µm und 130 µm, bevorzugt zwischen 35 µm und 90 µm liegen. Der Gewichts-Anteil der Effektpigmente an der Gesamtmenge im transparenten Masterbatch kann zwischen 1% bis 40%, insbesondere zwischen 2% und 10 Gew.-% liegen.

Der opake, färbige Basispulverlack B wird auf dieselbe Weise wie oben beschrieben hergestellt und enthält neben den oben angeführten Rohstoffen noch Farbpigmente und Füllstoffe, aber keine Metallic/Effektpigmente.

Als beispielhaftes Rezept kann für den Basispulverlack B die folgende Mischung angesehen werden: 680 Teile CRYLCOAT® 4655-2, 36 Teile Primid® XL-552, 5 Teile Worlee® Add 902, 8 Teile Lanco Wax TF 1890, 18 Teile Powder Add 9083, 2 Teile Pigment Rot 101, 10 Teile Pigment Braun 24, 7 Teile Pigment Black 7, 24 Teile Titan TS-6200, 210 Teile Portaryte B 15.

Im Anschluss wurden die beiden vermahlen Komponenten (Effektpulverlack A und färbiger, opaker Basispulverlack B) in einem Verhältnis 20 zu 80 durch Dryblending gemischt. Diese Mischung erfolgt entweder in einem Dryblend oder in einem Bondingmischer.

Fig. 17 zeigt eine Extruderschnecke, welche dem Zumischort via Sidefeeder nachfolgend mit Mischelementen bestückt ist.

Die Pigmentplättchen im erfindungsgemäßen Pulverlack wurden nur geringfügig geschert, verbogen oder zerschnitten, wodurch der ursprüngliche Effekt (Lichtreflexion und Sparkle Effekt) erhalten bleibt. So lässt sich beispielsweise der Einfluss des Zugabezeitpunkts und der verwendeten Schneckenkonfiguration durch Mikroskopaufnahmen der erkalteten Extruderschmelze (transparente Pulverlackschmelze enthaltend dispergierte Metallpigmente) bestimmen.

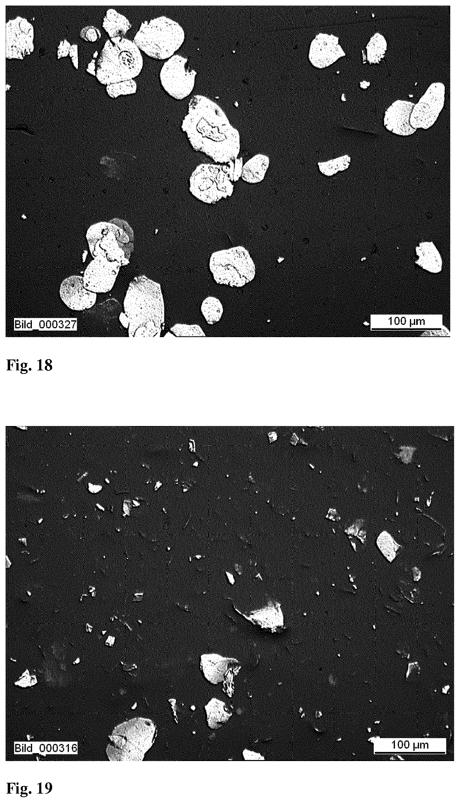

In den Mikroskopaufnahmen der Figuren 18 bis 22 zeigen die Auswirkungen unterschiedlicher Dispersionsprozesse mit hoher und niedriger Scherkraft. Hierzu wurden Aluminium-Pigmente mit einen D50 von ca. 55 µm durch Bonding, Dryblend oder Extrusion in einen dunklen Pulverlack (zur besseren visuellen Darstellung) eingebracht.

Fig. 18 zeigt in 200-facher Vergrößerung ein Auflichtmikroskopbild eines ausgehärteten Pulverlackfilms, wobei das Pigment durch Bonding in den Pulverlack eingebracht worden war, das Pigment ist wegen der geringen Scherkräfte im Bondingmischer nur geringfügig zerstört.

Fig. 19 zeigt im Vergleich dazu ebenfalls in 200-facher Vergrößerung ein Auflichtmikroskopbild eines ausgehärteten Pulverlackfilms, wobei das Pigment durch Extrusion in den Pulverlack eingebracht worden war, die Zugabe des Pigment erfolgte direkt mit dem Premix in den Extruder, ein Großteil des Pigments wurde zerstört (Hammerschlag).

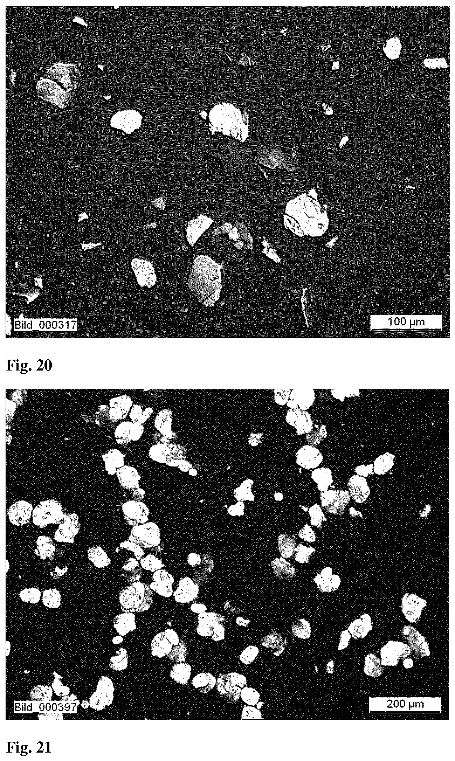

Fig. 20 zeigt ebenfalls in 200-facher Vergrößerung ein Auflichtmikroskopbild eines ausgehärteten Pulverlackfilms, wobei das Pigment zwar ebenfalls durch Extrusion in den Pulverlack eingebracht worden war, die Zugabe erfolgte jedoch über einen Sidefeeder. Schweckenkonfiguration und Mischelemente waren dabei wie in Fig. 17 dargestellt, es ist deutlich sichtbar, dass das Pigment nur geringfügig geschert wurde.

Fig. 21 zeigt ebenfalls in 200-facher Vergrößerung ein Auflichtmikroskopbild eines ausgehärteten Pulverlackfilms, wobei das Aluminiumpigment imDryblendverfahren eingemischt wurde. Auch hier ist deutlich sichtbar, dass das Pigment nur geringfügig geschert wurde.

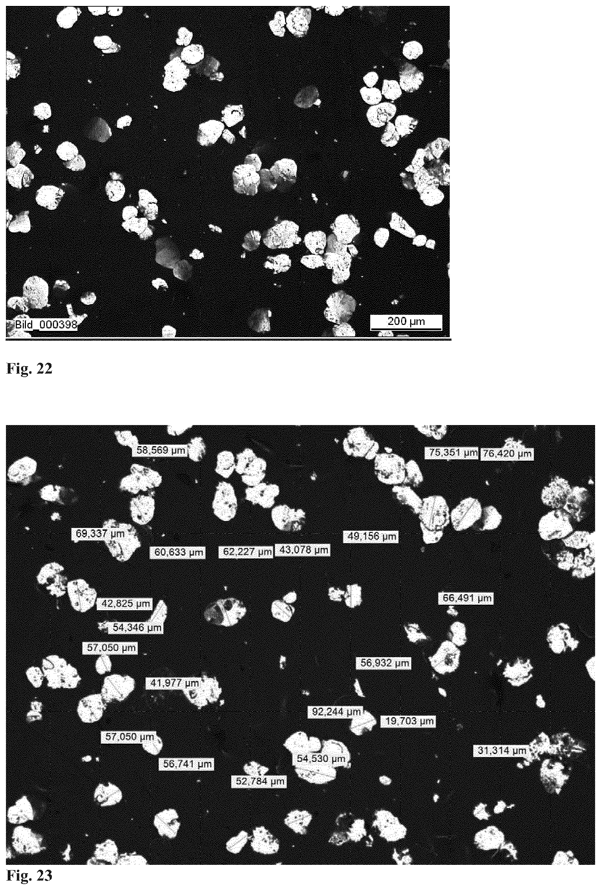

Fig. 22 schließlich zeigt ebenfalls in 200-facher Vergrößerung ein Auflichtmikroskopbild eines ausgehärteten Pulverlackfilms, wobei Aluminiumpigment mittels Sidefeeder im hinteren Drittel des Extruders einextrudiert wurde, die Schneckenkonfiguration wies ab dem Sidefeeder-Eintrag Förderelemente auf. Auch hier ist deutlich sichtbar, dass das Pigment nur geringfügig geschert wurde.

Im Zuge der vorliegenden Erfindung wurde gefunden, dass sich durch die Zugabe von mindestens einem Pigment durch mindestens einen Sidefeeder am Ende des Extruder Verfahrensteils die Scherkräfte soweit reduzieren lassen, dass das Pigment nur unwesentlich geschert und zerkleinert wird. Versuche mit einem Aluminium Silver Dollar Pigment der Fa. Eckart, PCU 5000, D50 ca. 55 µm, zeigen, dass sich der durchschnittliche Durchmesser der Effektpigmente nur unwesentlich gegenüber dem durchschnittlichen Durchmesser des Originalpigments (eingemischt als Dryblend) ändert. Zur Ermittlung der Effektgröße wurden mehrere Aufnahmen mit dem Mikroskop gemacht und die Partikel vermessen. Als Vergleich und zur leichteren optischen Beurteilung der Scherkräfte auf den finalen Effekt des Pulverlacks wurden Versuche in schwarzen, hochglänzenden Pulverlack durchgeführt. Die Pigmente wurden hierbei einmal von Anfang an bzw. einmal mittels Sidefeeder einextrudiert, die Schmelze dann gekühlt, vermahlen und als Pulverlack auf Bleche appliziert und eingebrannt. Das Ergebnis wurde für Vergleichszwecke optisch und auch mittels Auflichtmikroskopie bewertet. Zusätzlich wurden auch Extrusionsversuche in einen transparenten Lack durchgeführt, was zumindest teilweise zum Gegenstand der vorliegenden Erfindung führte. Es wurden einerseits die Partikelgrößen im kaltgewalzten Pulverlack-Chip vermessen, andererseits auf einem mit diesem vermahlenen Lack beschichteten Musterblech.

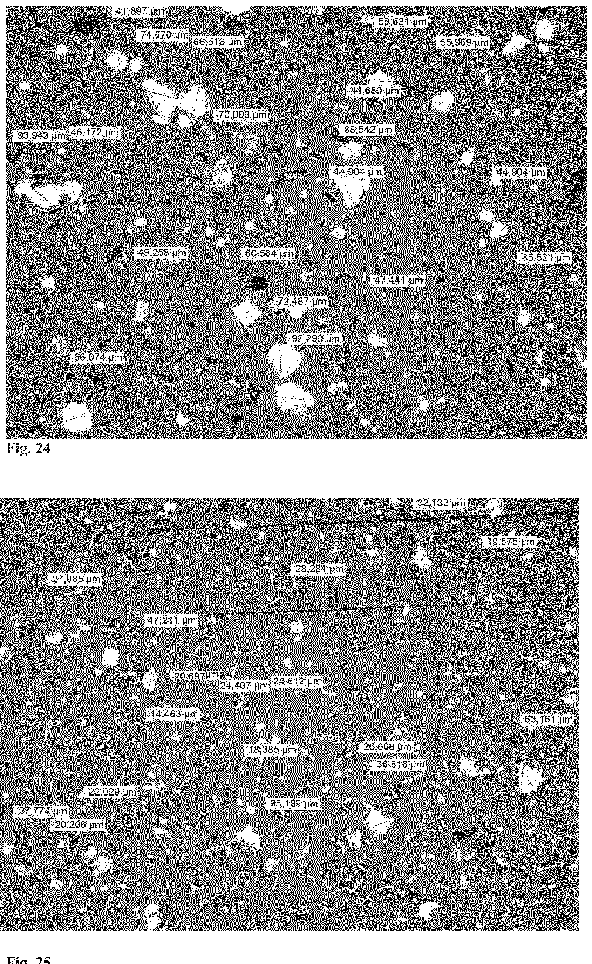

Bei der Fig. 25 ist auch deutlich zu erkennen, dass große Teile der Pigmente nicht mehr die ursprüngliche, runde Form haben, sondern nur mehr Fragmente davon zu sehen sind. Mikroskopische Auswertungen haben gezeigt, dass die Effektpigmente bzw. deren Fragmente bei Zugabe am Einlass des Extruders - gemeinsam mit allen anderen Rohstoffen - im fertigen Extrudat bzw. in der ausgehärteten Beschichtung nur mehr ca. 50% des ursprünglichen Durchmessers besitzen. Wurden die Pigmente durch den Sidefeeder eindosiert und nachfolgend nur geringen Scherkräften ausgesetzt (vgl. hierzu Fig. 17 der Schneckenkonfiguration) änderte sich der durchschnittliche Durchmesser nur unwesentlich. Die Messergebnisse sind in der nachfolgenden Tabelle dokumentiert:

| | Pigment-Masterbatch in transparent, Zuführung am Extrudereinlass, Beschichtung auf Blech | Pigment Masterbatch, Sidefeeder, Beschichtung auf Blech | Pigment in Schwarz HGL, am Extrudereinlass , beschichtetes Blech | | | Pigment in schwarz HGL, via Sidefeeder, beschichtetes Blech | | | Pigment am Extrudereinlass, Extrudat-Chip | | Pigment via Sidefeeder, Extrudat-Chip | | Pigment Dryblend, in schwarz HGL | |
|---|---|---|---|---|---|---|---|---|---|---|---|---|---|---|
| | | | | | | | | | | | | | | |
| | 26,52 | 56,3 | 32 | 60,6 | 59,3 | 57,9 | 59,6 | 68,4 | 24,75 | 26,92 | 56,3 | 93,25 | 58,6 | 84,6 |
| | 18,12 | 64,69 | 23,28 | 18,5 | 35,8 | 89,4 | 55,97 | 72,1 | 28,96 | 25,75 | 32,47 | 62,2 | 75,6 | 60 |
| | 18,62 | 52,74 | 19,57 | 22 | 30,8 | 63,7 | 74 | 59,6 | 13,3 | 19,8 | 65,44 | 29,56 | 49,15 | 63,1 |
| | 29,11 | 72,48 | 27,9 | 23,7 | 15,5 | 69,19 | 66,5 | 64 | 16,78 | 13,271 | 52,15 | 59,59 | 43 | 33,1 |
| | 7,8 | 52,74 | 47,2 | 16,8 | 23,3 | 58,7 | 44,68 | 54,65 | 18,12 | 16,58 | 34,12 | 52,17 | 62,2 | 53,3 |
| | 17,4 | 63,85 | 20,69 | 24,4 | 35,87 | 59,9 | 70,1 | 52,14 | 17,59 | 24,22 | 38,39 | 78,2 | 60,6 | 56,8 |
| | 14,48 | 62,22 | 14,46 | 27,2 | 23,32 | 54,03 | 46,17 | 59,12 | 27,4 | 25,9 | 58,43 | 63,4 | 69,3 | 35,7 |
| | 20,11 | 63,85 | 24,6 | 16,2 | 23,32 | 58,9 | 93,9 | 32,65 | 18,21 | 49,35 | 78,133 | 57,87 | 42,8 | 34,1 |
| | 39 | 51,35 | 24,1 | 15,57 | 30,17 | 58,4 | 44,9 | 43,92 | 25,35 | 38,2 | 60,54 | 58,58 | 54,35 | 64,2 |
| gemessener | 15,65 | 47,77 | 18,38 | 26,57 | 76,9 | 40,25 | 88,5 | 40,9 | 21,95 | 23,15 | 59,04 | 59,63 | 57,1 | 76,2 |
| D in µm | 11,66 | | 26,66 | 20,2 | 30,8 | 54,46 | 44,9 | 60,89 | 24,38 | 21,5 | 28,2 | 84,51 | 41,9 | 59,6 |
| | 36,19 | | 63,16 | 60,3 | 10,9 | 50,7 | 35,5 | 47,86 | 29,49 | 23,15 | 57,01 | | 56,9 | 67,27 |
| | 35,385 | | 35,18 | 18,5 | 32,6 | 57,63 | 47,4 | 57,63 | 23,37 | 21,4 | | | 92,2 | 82,15 |
| | 23,15 | | 22,02 | 24,2 | 19,1 | 48,15 | 60,5 | 27,5 | 33,04 | 22,1 | | | 19,7 | 44,6 |
| | 13 | | 20,2 | 32,3 | | 59,7 | 49,26 | | 37,9 | | | | 54,5 | 66,26 |
| | 14,93 | | 27,7 | 31,2 | | 56,72 | 66,1 | | 20,94 | | | | 52,75 | 92,58 |
| | 26,63 | | | 16 | | 63,7 | 92,29 | | | | | | 56,7 | 77,88 |
| | 24,06 | | | | | | | | | | | | 57 | |
| | 19,7 | | | | | | | | | | | | 31 | |
| | | | | | | | | | | | | | | |
| **Durchschnitt** | **21,66** | **58,80** | **27,94** | **26,72** | **31,98** | **58,91** | **61,19** | **52,95** | **23,85** | **25,09** | **51,69** | **63,54** | **54,49** | **61,85** |

| Durchschnitt der Messungen | gemessener Pigmentdurchmesser in µm |
|---|---|
| Zuführung in den Extruder von Anfang | 26,21 |
| Zuführung in den Extruder via Sidefeeder | 57,85 |
| Zumischung via Dryblend | 58,17 |
| | |
| D50 Pigment It. TDB | 55 |

Einige Aufnahmen und Vermessungen sind in den Fig. 23 bis Fig. 29 zu sehen. Hier ist auch deutlich erkennbar, dass das Pigment, wenn es von Anfang an extrudiert wurde, erheblich zerstört wird. Die Fig. 23 bis Fig. 25 wurden von Blechen gemacht, die mit dem fertig vermahlenen Pulver beschichtet wurden.

Fig. 23 zeigt eine Mikroskopaufnahme einer mit Pulverlack hergestellten Beschichtung in 100-facher Vergrößerung, wobei das Effektpigment mittels Dryblend eingemischt wurde (sehr geringe Scherkräfte). Die Form des Effektpigments verblieb rund bzw. oval.

Fig. 24 zeigt eine Mikroskopaufnahme einer mit dem erfindungsgemäßen Pulverlack hergestellten Beschichtung in 100-facher Vergrößerung, wobei das Effektpigment durch Zugabe über den Sidefeeder in den transparenten Pulverlack einextrudiert wurde, der Großteil der Pigmente ist noch rund/oval, es gibt nur wenige Fragmente.

Fig. 25 zeigt eine Mikroskopaufnahme einer mit einem Vergleichs-Pulverlack hergestellten Beschichtung in 100-facher Vergrößerung, wobei das Effektpigment durch Zuführung in den Extruder von Anfang an mitextrudiert wurde. Die Pigmentform ist unregelmäßig, es gibt sehr viele kleine Fragmente.

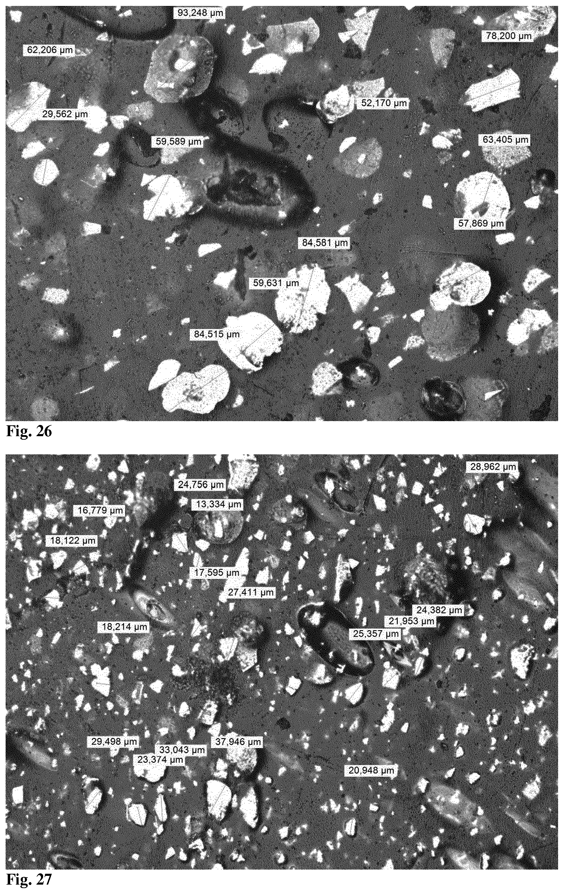

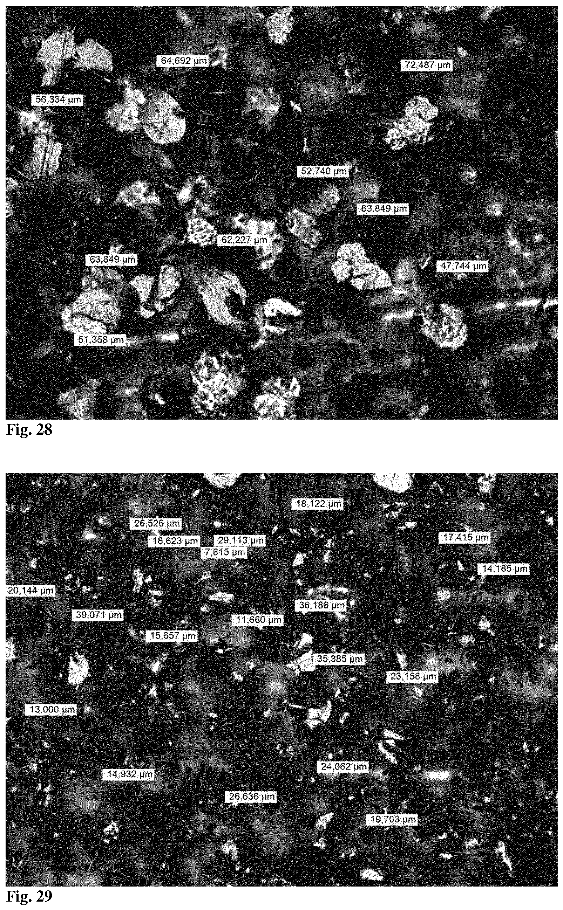

Die Aufnahmen der Fig. 26 bis einschließlich Fig. 29 wurden von Pulverlack-Chips gemacht, die direkt nach dem Extruder und der Kühlwalze (zu Fladen pressen, abkühlen und mechanisch brechen) ausgewertet wurden.

Fig. 26 zeigt eine Mikroskopaufnahme eines Pulverlackchips wie er in der vorliegenden Erfindung verwendet wird in 200-facher Vergrößerung, wobei das Effektpigment durch Zuführung in den Extruder via Sidefeeder zugemischt wurde.

Fig. 27 zeigt im Vergleich dazu eine Mikroskopaufnahme eines Vergleichs-Pulverlackchips in 200-facher Vergrößerung, wobei das Effektpigment durch Zuführung in den Extruder von Anfang an mitextrudiert wurde.

Fig. 28 zeigt eine Mikroskopaufnahme eines Masterbatch-Effektpulverlacks A (Pigment in transparentem Pulverlack) gemäß der vorliegenden Erfindung in 200-facher Vergrößerung, wobei das Effektpigment durch Zuführung in den Extruder via Sidefeeder zugemischt wurde, und

Fig. 29 zeigt im Vergleich dazu eine Mikroskopaufnahme eines Vergleichs-Masterbatch (Pigment in transparentem Pulverlack) in 200-facher Vergrößerung, wobei das Effektpigment durch Zuführung in den Extruder von Anfang an mitextrudiert wurde.

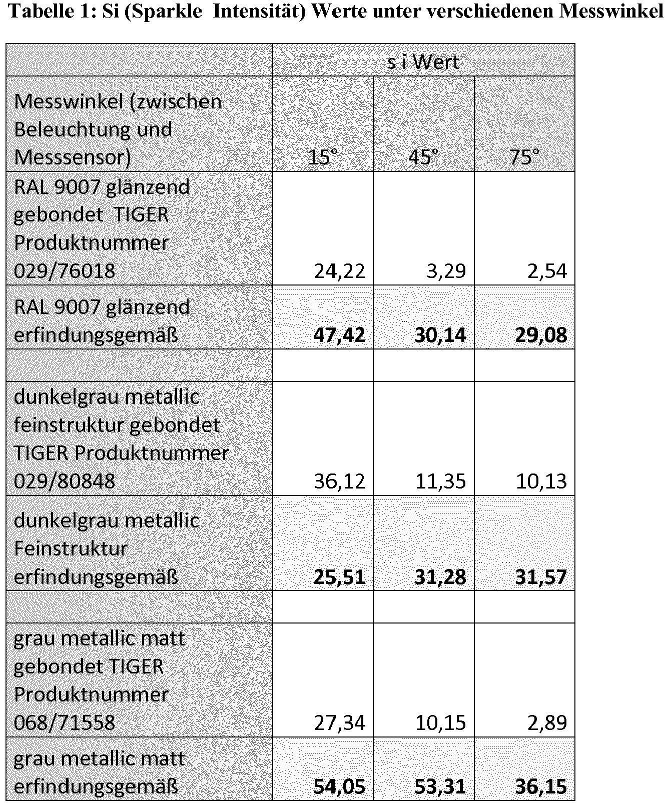

## Patentansprüche

1. Pulverlack umfassend mindestens einen Basispulverlack B und mindestens einen Effektpulverlack A mit Effektpigmenten, **dadurch gekennzeichnet, dass** die Effektpigmente im Effektpulverlack A von einer transparent härtenden Pulverlackmatrix zumindest teilweise umhüllt sind.

2. Pulverlack nach Anspruch 1, **dadurch gekennzeichnet, dass** der Pulverlack Effektpulverlack A mit Basispulverlack B vermischt in einem Masseverhältnis von 1 - 50% Effektpulverlack mit 50 - 99% Basispulverlack umfasst.

3. Pulverlack nach einem der Ansprüche 1 oder 2, **dadurch gekennzeichnet, dass** die Effektpigmente Metalleffektpigmente sind.

4. Pulverlack nach einem der Ansprüche 1 oder 2, **dadurch gekennzeichnet, dass** die Effektpigmente Perlglanzpigmente und/oder Interferenzpigmente sind.

5. Pulverlack nach einem der Ansprüche 1 bis 4, **dadurch gekennzeichnet, dass** der durchschnittliche Durchmesser der dispergierten Effektpigmente mindestens 80%, bevorzugt mindestens 90% des durchschnittlichen Durchmessers der ursprünglichen Effektpigmente beträgt.

6. Verfahren zur Herstellung eines Pulverlacks gemäß einem der Ansprüche 1 bis 5, **dadurch gekennzeichnet, dass** transparenter Pulverlack aufgeschmolzen wird und mindestens ein Effektpigment in die Schmelze eingerührt wird, wobei der aus dieser Pulverlackschmelze nach dem Erkalten durch Vermahlen gewonnene Effektpulverlack A dann mit einem Basispulverlack B vermischt wird.

7. Verfahren zur Herstellung eines Pulverlacks gemäß Anspruch 6, **dadurch gekennzeichnet, dass** das mindestens eine Effektpigment durch mindestens einen Sidefeeder während einem Extrusionsprozeß einer transparent härtenden Pulverlackschmelze zugegeben wird.

8. Effektpulverbeschichtung hergestellt mit dem Pulverlack nach einem der Ansprüche 1 bis 5, **dadurch gekennzeichnet, dass** in der Beschichtung enthaltene Effektpigmente durch eine transparente Matrix zumindest teilweise umgeben sind und mindestens ein aus dieser transparenten Matrix gebildeter Kanal von mindestens einem Effektpigment zur Oberfläche der Beschichtung führt.

## Claims

1. Powder paint comprising at least one base powder paint B and at least one effect powder paint A having effect pigments, **characterised in that** the effect pigments in the effect powder paint A are encased at least in part by a powder paint matrix which hardens transparently.

2. Powder paint according to claim 1, **characterised in that** the powder paint comprises effect powder paint A together with base powder paint B mixed in a mass ratio of from 1 to 50% effect powder paint to from 50 to 99% base powder paint.

3. Powder paint according to either claim 1 or claim 2, **characterised in that** the effect pigments are metal effect pigments.

4. Powder paint according to either claim 1 or claim 2, **characterised in that** the effect pigments are pearlescent pigments and/or interference pigments.

5. Powder paint according to any of claims 1 to 4, **characterised in that** the average diameter of the dispersed effect pigments is at least 80%, preferably at least 90%, of the average diameter of the original effect pigments.

6. Method for preparing a powder paint according to any of claims 1 to 5, **characterised in that** transparent powder paint is melted and at least one effect pigment is stirred into the melt, the effect powder paint A, obtained from said powder paint melt after cooling by pulverisation, then being mixed with a base powder paint B.

7. Method for preparing a powder paint according to claim 6, **characterised in that** the at least one effect pigment is added to a powder paint melt, which hardens transparently, by at least one side feeder during an extrusion process.

8. Effect powder coating prepared using the powder paint according to any of claims 1 to 5, **characterised in that** effect pigments contained in the coating are surrounded at least in part by a transparent matrix and at least one channel formed from said transparent matrix leads from at least one effect pigment to the surface of the coating.

## Revendications

1. Peinture en poudre comprenant au moins une peinture en poudre de base B et au moins une peinture en poudre à effet A avec des pigments à effet, **caractérisée en ce que** les pigments à effet dans la peinture en poudre à effet A sont entourés au moins en partie par une matrice de peinture en poudre durcissant en étant transparente.

2. Peinture en poudre selon la revendication 1, **caractérisée en ce que** la peinture en poudre comprend la peinture en poudre à effet A mélangée avec la peinture en poudre de base B dans un rapport en masse de 1 - 50 % de peinture en poudre à effet avec 50 - 99 % de peinture en poudre de base.

3. Peinture en poudre selon l'une des revendications 1 ou 2, **caractérisée en ce que** les pigments à effet sont des pigments à effet métallique.

4. Peinture en poudre selon l'une des revendications 1 ou 2, **caractérisée en ce que** les pigments à effet sont des pigments à lustre nacré et/ou des pigments à interférence.

5. Peinture en poudre selon l'une des revendications 1 à 4, **caractérisée en ce que** le diamètre moyen des pigments à effet dispersés est d'au moins 80 %, de préférence d'au moins 90 % du diamètre moyen des pigments à effet initiaux.

6. Procédé pour fabriquer une peinture en poudre selon l'une des revendications 1 à 5, **caractérisé en ce qu'**une peinture en poudre transparente est fondue et au moins un pigment à effet est incorporé dans la masse fondue, où la peinture en poudre à effet A obtenue par broyage à partir de cette masse fondue de peinture en poudre après le refroidissement est ensuite mélangée avec une peinture en poudre de base B.

7. Procédé pour fabriquer une peinture en poudre selon la revendication 6, **caractérisé en ce que** le au moins un pigment à effet est ajouté par au moins un sidefeeder pendant un processus d'extrusion d'une masse fondue de peinture en poudre durcissant en étant transparente.

8. Revêtement de poudre à effet fabriqué avec la peinture en poudre selon l'une des revendications 1 à 5, **caractérisé en ce que** les pigments à effet contenus dans le revêtement sont entourés au moins en partie par une matrice transparente et au moins un canal formé à partir de cette matrice transparente conduit depuis au moins un pigment à effet jusqu'à la surface du revêtement.
